# EUROPEAN PATENT SPECIFICATION

(11) **EP 3 014 314 B1**
(45) Date of publication and mention of the grant of the patent: **21.11.2018**
(21) Application number: 14716207.7
(22) Date of filing: 19.03.2014
(51) Int. Cl.: G01V 99/00

(54) **A METHOD OF QUANTIFYING HYDROTHERMAL IMPACT**
VERFAHREN ZUR QUANTIFIZIERUNG HYDROTHERMALER AUSWIRKUNGEN
MÉTHODE DE QUANTIFICATION D'IMPACT HYDROTHERMIQUE

(30) Priority: 25.06.2013 US 201313926563
(43) Date of publication of application: 04.05.2016
(73) Proprietor: Chevron U.S.A. Inc., San Ramon, CA 94583 (US)
(72) Inventor: THOMAS, Andrew Ralph, San Ramon, California 94583 (US)
(74) Representative: Haseltine Lake LLP
(86) International application number: PCT/US2014/031172
(87) International publication number: WO 2014/209444

(56) References cited:
- WO-A1-02/061239
- MUNZ I A ET AL: "Pressure-temperature-time-composition (P-T-t-X) constraints of multiple petroleum charges in the Hild field, Norwegian North Sea", MARINE AND PETROLEUM GEOLOGY, BUTTERWORTH SCIENTIFIC, GUILDFORD, GB, vol. 21, no. 8, 1 September 2004 (2004-09-01), pages 1043-1060, XP004601048, ISSN: 0264-8172, DOI: 10.1016/J.MARPETGEO.2004.05.006
- P. A. BJORKUM, E.H.OELKERS, P.H.NADEAU, O.WALDERHAUG, W.M.MURPHY: "Porosity prediction in quartzose sandstones as a function of time, temperature, depth, stylolite frequency, and hydrocarbon saturation", AAPG BULLETIN, vol. 82, no. 4, April 1998 (1998-04), pages 637-648, XP002730000,
- MARK D F ET AL: "Late Palaeozoic hydrocarbon migration through the Clair field, West of Shetland, UK Atlantic margin", GEOCHIMICA ET COSMOCHIMICA ACTA, PERGAMON PRESS, NEW YORK, NY, US, vol. 72, no. 10, 15 May 2008 (2008-05-15), pages 2510-2533, XP022668301, ISSN: 0016-7037, DOI: 10.1016/J.GCA.2007.11.037 [retrieved on 2008-02-26]
- HUC A Y ET AL: "Pyrobitumen occurrence and formation in a Cambro-Ordovician sandstone reservoir, Fahud Salt Basin, North Oman", CHEMICAL GEOLOGY, ELSEVIER SCIENCE PUBLISHER B.V., AMSTERDAM, NL, vol. 168, no. 1-2, 1 July 2000 (2000-07-01), pages 99-112, XP004568246, ISSN: 0009-2541, DOI: 10.1016/S0009-2541(00)00190-X
- CAI C ET AL: "Methane-dominated thermochemical sulphate reduction in the Triassic Feixianguan Formation East Sichuan Basin, China: towards prediction of fatal H2S concentrations", MARINE AND PETROLEUM GEOLOGY, BUTTERWORTH SCIENTIFIC, GUILDFORD, GB, vol. 21, no. 10, 1 December 2004 (2004-12-01), pages 1265-1279, XP004652145, ISSN: 0264-8172, DOI: 10.1016/J.MARPETGEO.2004.09.003
- M. OSBORNE, S. HASZELDINE: "Evidence for resetting of fluid inclusion temperatures from quartz cements in oilfields", MARINE AND PETROLEUM GEOLOGY, vol. 10, June 1993 (1993-06), pages 271-278, XP002730001,

## Description

### FIELD OF THE INVENTION

The present invention relates to a method of quantifying hydrothermal impact. The present invention also relates to a method of characterising a geological pattern of a geological site.

### BACKGROUND OF THE INVENTION

Porosity in sandstones diminishes during burial due to compaction, mineral cementation processes that accompany thermal exposure, and other locally important processes. Sandstone porosity reduction studies have been published in the Gulf of Mexico, North Sea, and many other basins. These studies are useful in that they describe the depth-related porosity decline that may be factored into economics of oil and gas extraction. Quartz cement, an important porosity reducing cement in sandstones, has been understood to increase with increasing thermal exposure that comes with burial.

In some reservoirs, however, porosity reduction appears decoupled from temperature history because the amount of quartz cement is observed to occur in patterns which may increase with decreasing depth in a single sandstone body as viewed in a subsurface well penetration. Such a distribution of quartz cement diminishes reservoir quality in the upper reaches of sandstone reservoirs. Furthermore, to the knowledge of the inventor, such atypical distributions of quartz cement have not in the past been explained. Understanding and being able to predict such a distribution in any reservoirs may assist in constraining uncertainty in exploration.

Reference may be made to WO 02/0611239, which relates to a method for evaluating the hydrocarbon potential of sedimentary basins from fluid inclusions.

### SUMMARY OF THE INVENTION

The present invention is defined by the independent claims, to which reference should now be made. Specific embodiments are defined in the dependent claims.

The step of generating an impact parameter may include generating a numerical impact parameter. Alternatively or additionally, the step of generating an impact parameter may include generating a non-numerical impact parameter.

The step of generating an impact parameter may include generating the impact parameter associated with a reservoir depth. Alternatively the step of generating an impact parameter may include generating the impact parameter associated with one of a plurality of reservoir depths.

The step of receiving second data indicative of estimates of the trapping temperatures may include receiving or obtaining a homogenization temperature (Tₕ) for each of the plurality of fluid inclusions.

The homogenization temperature may be defined as a temperature at which a two-phase gas/liquid fluid inclusion fill is caused to transition into a single-phase liquid filled fluid inclusion during heating.

The reservoir temperature may be a present-day temperature and the trapping temperatures may be paleo-temperatures.

The stratigraphic unit may include sandstone.

The hydrothermal impact may be associated with accelerated porosity reduction in the sandstone.

The hydrothermal impact may be associated with movements or migration of hydrothermal fluid.

The location-dependent geological pattern may be a depth-related geological pattern and the plurality of locations may be a plurality of reservoir depths.

The geological pattern may be a vertical quartz cementation tendency associated with movement of hydrothermal fluid.

The hydrothermal fluid may be in the form of hydrothermal fluid pulses.

The geological site may be a basin or a well.

### BRIEF DESCRIPTION OF THE DRAWINGS

Figure 1 illustrates an embodiment of a method of quantifying a hydrothermal impact.
Figure 2 illustrates an embodiment of a apparatus implementing the method of Figure 1.
Figure 3A illustrates a histogram of homogenization temperatures of a plurality of inclusions in a sample from one stratigraphic unit.
Figure 3B illustrates a table of homogenization temperatures and well temperature of a plurality of inclusions in another sample from one stratigraphic unit.
Figure 4 is a plot of hydrothermal impact parameter with respect to depth in a first well.
Figure 5A is a plot of hydrothermal impact parameter with respect to depth in a second well.
Figure 5B is a well log associated with the second well.
Figure 6 illustrates vertical migration of hydrothermal fluids through stratigraphic conduits and faults. No lateral scale is implied.

### DETAILED DESCRIPTION OF THE EMBODIMENTS

Described herein is a method for quantifying hydrothermal impact on a stratigraphic unit. As used herein, a "stratigraphic unit" refers to at least a portion of a layer or stratum of geological formation having a dominant geological character, property, or attribute. For example, a stratigraphic unit of interest may include sandstones or a substantial amount of sandstone. A reservoir is a part or all of a stratigraphic unit and is intersected by a wellbore. A wellbore may intersect more than one reservoir. As explained above, quartz cement in some geological reservoirs has an upward increasing pattern, which manifests as a reduction in porosity of the reservoir sandstones. The effects of having hydrothermal fluids, defined as hotter-than-present-day fluids, co-located within the stratigraphic unit are that mineral cementation may be accelerated and porosity affected. As will be described in more detail below, hydrothermal impact may be defined as the number of estimates of trapping temperature (at that particular reservoir depth) that are greater than the reservoir temperature (at that particular reservoir depth) divided by the total number of estimates (at that particular reservoir depth).

The described method may be useful in providing a way to investigate and provide experimental support of this observation. In particular, the described method may be used to quantify hydrothermal anomalies of a stratigraphic unit of a geological reservoir, where porosity reduction in the stratigraphic unit would have been accelerated some point or points in the past. Furthermore, the temperature and frequency of any hydrothermal fluid pulses are expected to affect the rate of quartz cementation and therefore porosity reduction.

It shall be apparent to a skilled person in the art that the described method and the corresponding apparatus include the following advantages:
▪ The method may be used as a tool for estimating and comparing reservoir quality between geological sites or between different depths of the same geological site.
▪ The method may identify potential quality reservoirs at stratigraphic layers which are beneath basin dewatering conduits and which would otherwise be missed due to an incorrect assumption that porosity diminishes below these layers.

The method can be used to investigate high or low porosity patterns associated with quartz cementation.

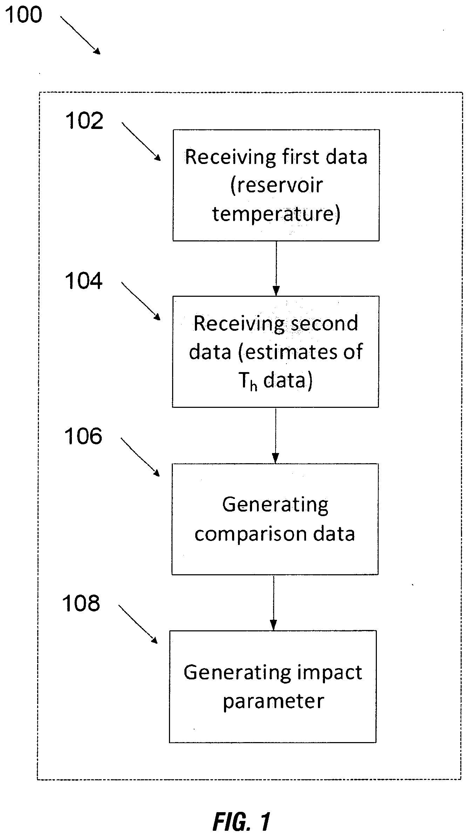

Referring to Figure 1, the described method 100 generally comprises (a) the step 102 of receiving first data indicative of a reservoir temperature associated with the stratigraphic unit, (b) the step 104 of receiving second data indicative of estimates of the trapping temperatures associated with a plurality of fluid inclusions in a sample of the stratigraphic unit, (c) the step 106 of generating comparison data indicative of a comparison between the first data and the second data, and (d) the step 108 of generating based on the comparison data an impact parameter indicative of a hydrothermal impact on the stratigraphic unit. In one example, the fluid inclusions are quartz cement fluid inclusions. As is known in the art, fluid inclusions are typically small inclusions that are trapped or captured within crystalline minerals, such as quartz cement, in a stratigraphic unit. Fluid inclusions in the quartz cement record cementation history which can be discerned through laboratory measurements of homogenization temperature, a conservative proxy for inclusion trapping temperature.

The reservoir temperature in step 102 may represent the present-day temperature associated with the stratigraphic unit. On the other hand, the trapping temperature of a fluid inclusion in step 104 may represent a paleo-temperature associated with the stratigraphic unit at some point in the past. As used herein, "trapping temperature" refers to the temperature of the fluid when it is trapped or captured within the crystalline material; that is, the temperature of the fluid when the fluid inclusion is formed. Thus, the trapped or captured fluid inclusions may contain information, such as temperature of the reservoir fluid at the time of their capture.

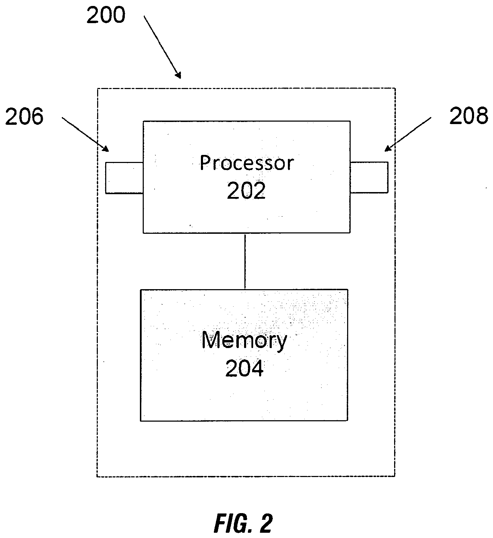

Method 100 may be implemented by an apparatus 200. Referring to Figure 2, apparatus 200 may be a computer, computer program product or an embedded piece of hardware. Apparatus 200 may comprise one or more processors 202, memory 204 coupled to the one or more processors 202, an input port 206 coupled to the one or more processors 202 and an output port 208 coupled to the one or more processors 202. Input port 206 may be configured for receiving (i) first data indicative of a reservoir temperature associated with the stratigraphic unit and (ii) second data indicative of estimates of the trapping temperatures associated with a plurality of fluid inclusions in a sample of the stratigraphic unit. The one or more processors 202 may be configured to execute a set of instructions stored on the memory 204. The set of instructions may include (i) instructions for generating comparison data indicative of a comparison between the first data and the second data, and (ii) instructions for generating based on the comparison data an impact parameter indicative of a hydrothermal impact on the stratigraphic unit. Output port 208 may be configured to provide the impact parameter to an output device such as a display.

In one embodiment, reservoir temperatures may be obtained by field tests. Once obtained, data indicative of the reservoir temperatures may be sent to and received by input port 204 of apparatus 200.

In one embodiment, the trapping temperature of the fluid inclusion may be estimated by the homogenization temperature (Tₕ) of the fluid inclusion. In general, Tₕ is a close approximation to the trapping temperature, which is typically 5 to 10 degrees C lower than the trapping temperature. Tₕ values for a particular geological site, or a particular location (such as a particular reservoir depth) within a geological site, may be obtained from conducting laboratory tests on a sample of a relevant stratigraphic unit. In one instance, the Tₕ values may be received or obtained from a vendor. The principles of such laboratory tests are described as follows. Fluid inclusions at the time of their trapping or capture may be in liquid form. As the sample of a stratigraphic unit is brought to the surface, the liquid in the fluid inclusions may cool resulting in formation of a gas bubble. Generally when a fluid inclusion-containing rock or a sample of a stratigraphic unit is retrieved from the earth and cooled, it evolves a gas bubble from the liquid rendering it a two-phase fluid inclusion. It is possible to re-dissolve the gas bubble into a liquid form by application of heat. The temperature at which the re-dissolution occurs is Tₕ, which is a conservative estimate of the actual trapping temperature of the fluid inclusion. Although the method does not provide the true trapping temperatures, the method is designed to illustrate where Tₕ exceeds present day reservoir temperatures. If Tₕ is a conservative approximation or is slightly lower than the true trapping temperature, then a corrected trapping temperature would only be associated with a higher hydrothermal impact. Gas corrections may be used to arrive at the true trapping temperatures but such corrections may carry their own uncertainty and so Tₕ is a reasonable proxy.

By analysing a fluid inclusion trapped in a sample of a stratigraphic unit, and specifically by estimating the temperature at which the fluid inclusion was trapped, it may be possible to estimate the paleo-temperature of any hydrothermal fluid that once migrated through the stratigraphic unit. Furthermore, a sample of stratigraphic unit generally includes a plurality of fluid inclusions. Accordingly, different fluid inclusions in a sample of stratigraphic unit may provide different values of Tₕ. A sample of stratigraphic unit may therefore provide a range of estimates of actual trapping temperatures. Once obtained, data indicative of the estimates of a plurality of trapping temperatures may be sent to and received by input port 204 of apparatus 200.

In one embodiment, the comparison data may be generated by comparing the reservoir temperature with each of the estimates of the trapping temperatures. Because of the range of Tₕ values associated with different fluid inclusions, each estimate of trapping temperature may compare differently with the reservoir temperature. For example, the processor 202 may be configured to determine whether each of the estimates of the trapping temperature is greater than, equal to, or less than the reservoir temperature.

In one embodiment, the hydrothermal impact parameter is a numerical parameter. To generate the numerical impact parameter indicative of the hydrothermal impact, the processor 202 is configured to determine a ratio, proportion or percentage of the estimates of trapping temperatures that are greater than, equal to, or less than the reservoir temperature. For example, the numerical impact parameter at a particular reservoir depth may be determined as the number of estimates of trapping temperatures (at that particular reservoir depth) that are greater than the reservoir temperature (at that particular reservoir depth) divided by the total number of estimates. In this example, a numerical impact parameter of 1 or 100% indicates that all Tₕ values associated with all tested fluid inclusions in the sample are higher than the reservoir temperature. An impact parameter of 100% or close to 100% may therefore indicate a very high probability of hotter-than-present-day hydrothermal fluids having affected the porosity of the stratigraphic unit from which the sample is taken. The hydrothermal result may be, for example, a change in content of quartz cement and hence porosity of sandstones in a geological site. Conversely, a numerical impact parameter of 0% or close to 0% at a reservoir depth may indicate a very low probability of hotter-than-present-day hydrothermal fluids (if any) having affected the porosity of the stratigraphic unit at that reservoir depth from which the sample is taken. A numerical impact parameter of 0.5 or 50% may indicate a modest probability of hotter-than-present-day hydrothermal fluids having affected the porosity of the stratigraphic unit from which the sample is taken.

In an alternative embodiment, the impact parameter may be a non-numerical parameter. For example, the processor 202 may be configured to determine the non-numerical parameter to be:
▪ "high" if there are more than 66% of the estimates of trapping temperatures that are greater than the reservoir temperature; and
▪ "medium" if there are more than 33% but less than or equal to 66% of the estimates of trapping temperatures that are greater than the reservoir temperature; and
▪ "low" if there are less than or equal to 33% of the estimates of trapping temperatures that are greater than the reservoir temperature.

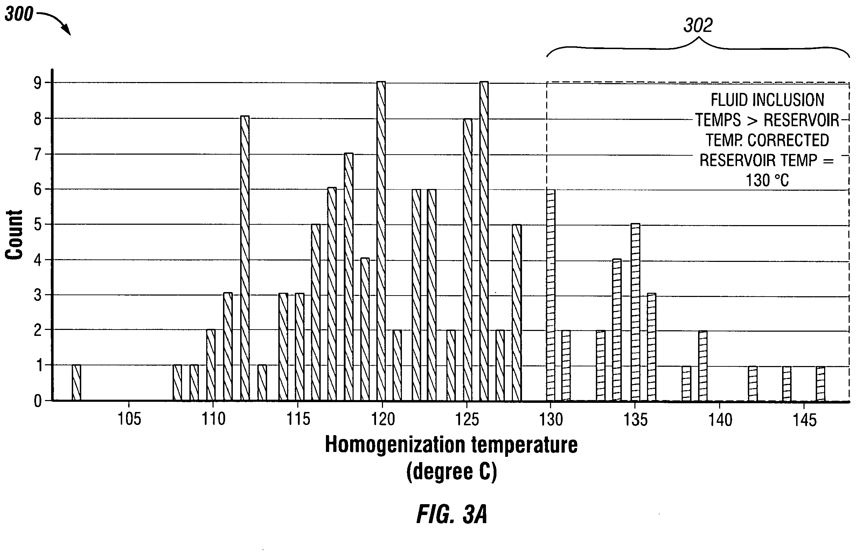

However, it is noted that any percentages of the estimates may be used to define these non-numerical parameters. Figure 3A illustrates a histogram 300 of Tₕ values for all tested fluid inclusions in a given sample from one stratigraphic unit at a particular depth. The present-day reservoir temperature of the geological site from which the sample is taken at that particular depth is measured at 130±1 °C. In some cases, the Tₕ values exceed the present-day reservoir temperature by a few degrees. In one case, the Tₕ value exceeds the present-day reservoir temperature by 16°C. These cases 302 are hydrothermal indicators. The hydrothermal impact at that particular depth may be defined as the number of estimates of trapping temperature that are greater than the reservoir temperature divided by the total number of estimates. The numerical impact parameter indicative of a hydrothermal impact can therefore be determined by totalling up the number of fluid inclusions that exhibit Tₕ at "hotter than present day" reservoir temperature and dividing by the total number of tested fluid inclusions.

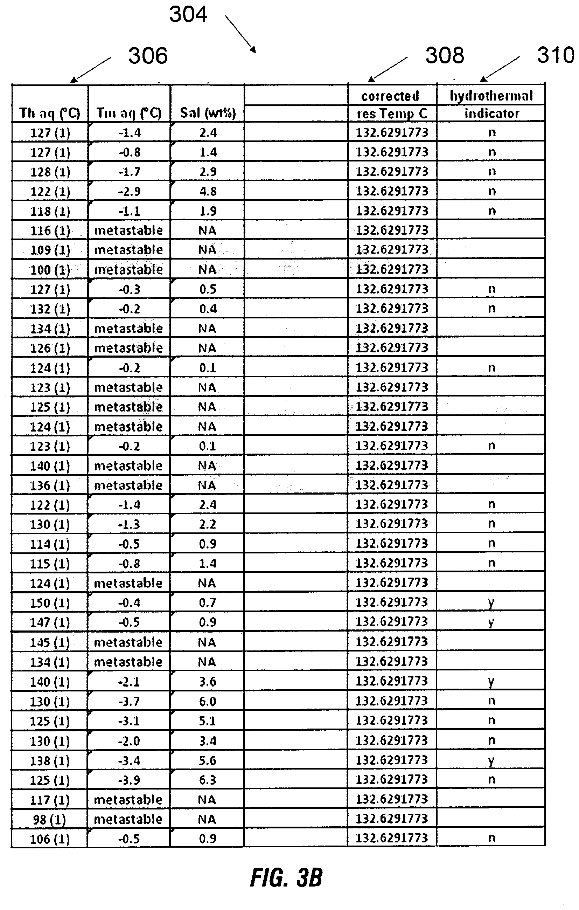

Figure 3B illustrates a table 304 of homogenization temperatures (Tₕ) (column 306) of a plurality of inclusions in another sample from one reservoir taken at greater than 3 km below the subsea datum of a geological site. Each of the 37 rows in table 304 represents measurements obtained from a particular inclusion.

In one instance, metastable data which may represent less reliable measurement are discarded. Although metastable data may be used to evaluate Tₕ and thereby estimate trapping temperatures, more reliable data are preferred in estimating trapping temperatures. Reliability of data may be indicated from the temperature measurements obtained after application of heat or freezing to the fluid inclusions. Data reliability is related to the viability of the fluid inclusion to withstand the heating and cooling process required for measurements, and is not related to vendor reliability.

As illustrated in Figure 3B, the present-day reservoir temperature (column 308) at that particular depth is measured to be 132.63°C. Each Tₕ value in column 306 is compared to the present-day reservoir temperature in column 308. Comparison data (column 310) is then generated based on the comparison. If a Tₕ value is greater than the present-day reservoir temperature, then it is considered a hydrothermal indicator ("y" in column 310). If a Tₕ value is less than or equal to the present-day reservoir temperature, then it is considered not a hydrothermal indicator ("n" in column 310). In the table 304, after discarding metastable data associated with 15 fluid inclusions, 4 out of the remaining 22 of the Tₕ values are determined to exceed the present-day reservoir temperature. A numerical impact parameter of 18% or 0.18 may be generated.

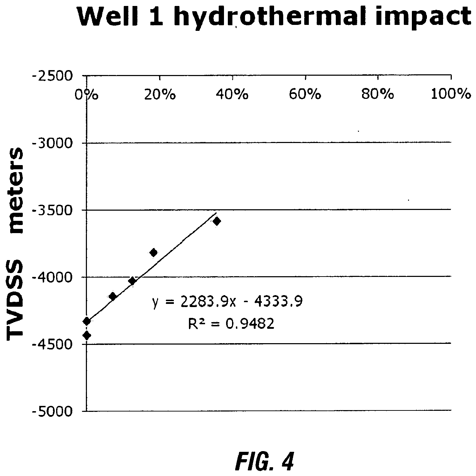

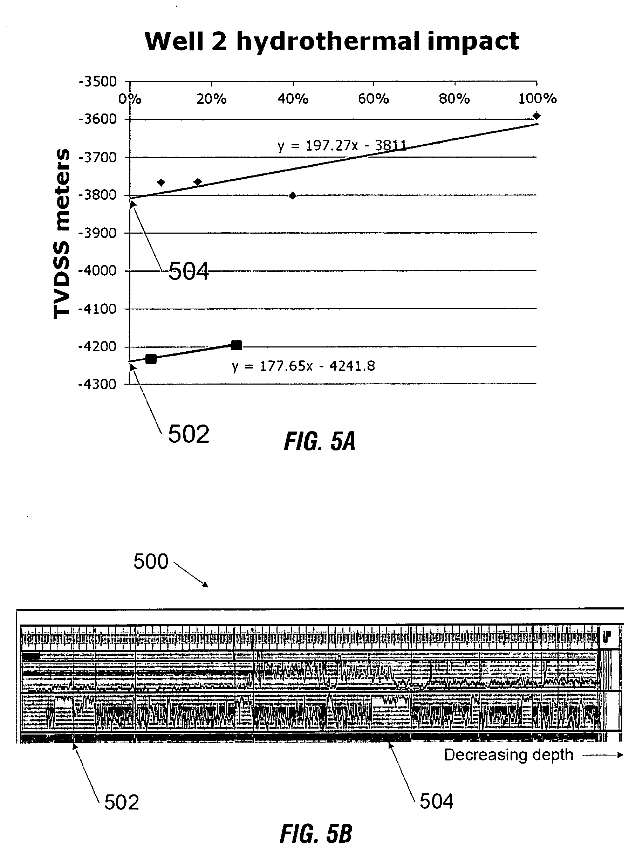

Also described is a method of characterising a location-dependent geological pattern, such as vertical quartz cementation tendency, of a geological site having a plurality of locations. This tendency may be associated with movement of hydrothermal fluid, which may be in the form of hydrothermal fluid pulses. This method may be appropriate for samples which are buried to their maximum depth present day. The characterising method may comprise the step of executing method 100 for each of a plurality of locations of a geological site, such as different reservoir depths of a well. An impact parameter may therefore be determined for each of the plurality of locations. Figures 4 and 5A illustrate plots of numerical impact parameter (%) with respect to distance from surface (metres) for two different wells. The plot in Figure 4 illustrates an upward trend of the numerical impact parameter at decreasing depth in a first well. This upward trend is consistent with the upward increasing pattern of hydrothermal influence and accelerated quartz cementation. The plot in Figure 5A illustrates two independent upward trends of the numerical impact parameter at decreasing depth in a second well. The double upward trends may be due to migration of hydrothermal fluids from two separate stratigraphic conduits.

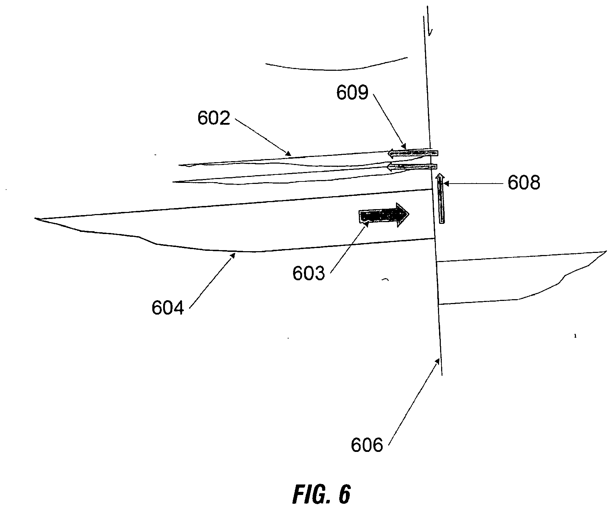

Figure 5B is a well log 500 corresponding to Figure 5A. The well log 500 in Figure 5B is an openhole log data representation which may provide indications of the presence of thick sandstones interpreted to be stratigraphic conduits. For example, indication 502 indicates the presence of a 50-metre thick sandstone at 4240 m below sea level. Indication 504 indicates the presence of a 55-metre thick sandstone at 3810 m below sea level. It may be inferred from Figure 5 that the hydrothermal impact approaches zero in the sandstone conduits of the second well. Referring to Figure 6 stratigraphic conduits 604 deliver basinal dewatering fluid pulses up to shallower strata of sandstones through fault pathways 606. The thick master stratigraphic conduit was faulted down on the right hand side. The fault acts as a vertical delivery path for hydrothermal fluid, which may take the form of hydrothermal fluid pulses. Arrows 603, 608 and 609 illustrate the dewatering delivery path of the hydrothermal fluid pulses to the sandstone 602. The hydrothermal fluids affect or preferentially cement the tops of the sandstones 602. The hydrothermal fluid pulses cool during and after they migrate upwards and deposit quartz cement. The shallower sandstones 602 receiving the hydrothermal fluids are thus expected to exhibit a reduction in porosity. That is, the hydrothermal impact on the stratigraphic unit may be associated with an accelerated reduction in its porosity.

This method may also be applied to characterise or investigate geological properties of other geological formations or other kinds of reservoir rocks such as carbonates. The method is viable for any sandstone strata in the geological site which have not been inverted or uplifted once the temperatures exceed the onset of quartz cementation. Because quartz cement is driven by thermal exposure, uplifted strata heated to greater temperatures could be misinterpreted as containing hydrothermal impact when data may be more appropriately interpreted in the context of cooled strata.

## Claims

1. A computer implemented method (100) of quantifying a hydrothermal impact on a stratigraphic unit, the method comprising the steps of:
receiving (102) first data indicative of a reservoir temperature associated with the stratigraphic unit;
receiving (104) second data indicative of estimates of the trapping temperatures associated with a plurality of fluid inclusions in a sample of the stratigraphic unit;
generating (106) comparison data indicative of a comparison between the first data and the second data, including comparing the reservoir temperature with each of the estimates of the trapping temperatures and determining whether each of the estimates of the trapping temperatures is greater than, equal to, or less than the reservoir temperature; and
generating (108) based on the comparison data an impact parameter indicative of a hydrothermal impact on the stratigraphic unit, **characterised in that** the generating includes determining a ratio, proportion or percentage of the estimates of trapping temperatures that are greater than, equal to, or less than the reservoir temperature.

2. The method of claim 1 wherein the step of generating an impact parameter includes generating a numerical impact parameter or a non-numerical impact parameter.

3. The method of claim 1 wherein the step of generating an impact parameter includes generating the impact parameter associated with a reservoir depth.

4. The method of claim 1 wherein the step of generating an impact parameter may include generating the impact parameter for one of a plurality of reservoir depths.

5. The method of claim 1 wherein the step of receiving second data indicative of estimates of the trapping temperatures includes receiving or obtaining a homogenization temperature for each of the plurality of fluid inclusions,
optionally wherein the homogenization temperature is defined as a temperature at which a two-phase gas/liquid fluid inclusion is caused to transition into a single-phase liquid fluid inclusion.

6. The method of claim 1 wherein the stratigraphic unit includes sandstone,
optionally wherein the hydrothermal impact is associated with accelerated porosity reduction in the sandstone.

7. The method of claim 1 wherein the hydrothermal impact is associated with movements or migration of hydrothermal fluid.

8. A method of characterising a location-dependent geological pattern of a geological site having a plurality of locations by performing the method of claim 1, wherein the method steps are performed for each of the plurality of locations.

9. The method of claim 8 wherein the location-dependent geological pattern is a depth-related geological pattern and the plurality of locations include a plurality of reservoir depths.

10. The method of claim 8 wherein the geological pattern is a vertical quartz cementation tendency,
optionally wherein the vertical quartz cementation tendency is associated with movement of hydrothermal fluid,
optionally wherein the hydrothermal fluid is in the form of hydrothermal fluid pulses.

11. The method of claim 8 wherein the geological site is a basin or a well.

12. An apparatus (200) for quantifying a hydrothermal impact on a stratigraphic unit, the apparatus configured to carry out the method of any of the preceding claims.

13. A set of instructions configured to cause a computer to carry out the method of any of claims 1 to 11.

14. A memory having the set of instructions of claim 13 stored thereon.

## Patentansprüche

1. Rechner-implementiertes Verfahren (100) zum Quantifizieren eines hydrothermischen Einschlags auf eine stratigraphische Einheit, das Verfahren umfassend die Schritte
Empfangen (102) erster Daten, die eine Reservoirtemperatur in Verbindung mit der stratigraphischen Einheit anzeigen;
Empfangen (104) zweiter Daten, die Schätzungen der Einschlusstemperaturen in Verbindung mit einer Mehrzahl Fluideinschlüsse in einer Probe der stratigraphischen Einheit anzeigen,
Erzeugen (106) von Vergleichsdaten, die einen Vergleich zwischen den ersten und den zweiten Daten anzeigen, einschließlich Vergleichen der Reservoirtemperatur mit jeder der Schätzungen der Einschlusstemperaturen und Bestimmen, ob die Schätzungen der Einschlusstemperaturen größer, gleich oder kleiner der Reservoirtemperatur sind; und
Erzeugen (108), auf der Grundlage der Vergleichsdaten, eines Einschlagsparameters, der einen hydrothermischen Einschlag auf die stratigraphische Einheit anzeigt, **dadurch gekennzeichnet, dass** das Erzeugen einschließt Bestimmen eines Verhältnisses, einer Proportion oder einer Prozentzahl der Schätzungen der Einschlusstemperaturen, die größer, gleich oder kleiner der Reservoirtemperatur sind.

2. Verfahren gemäß Anspruch 1, wobei der Schritt Erzeugen eines Einschlagsparameters einschließt Erzeugen eines numerischen Einschlagsparameters oder eines nicht numerischen Einschlagsparameters.

3. Verfahren gemäß Anspruch 1, wobei der Schritt Erzeugen eines Einschlagsparameters einschließt Erzeugen des Einschlagsparameters in Verbindung mit einer Reservoirtiefe.

4. Verfahren gemäß Anspruch 1, wobei der Schritt Erzeugen eines Einschlagsparameters einschließt Erzeugen des Einschlagsparameters für eine aus einer Mehrzahl Reservoirtiefen.

5. Verfahren gemäß Anspruch 1, wobei der Schritt Empfangen zweiter Daten, die Schätzungen der Einschlusstemperaturen anzeigen, einschließt Empfangen oder Erhalten einer Homogenisierungstemperatur für jeden aus der Mehrzahl Fluideinschlüsse,
wahlweise wobei die Homogenisierungstemperatur definiert wird als eine Temperatur, bei der ein Zweiphasen-Gas/Flüssigkeits-Fluideinschluss dazu gebracht wird, in einen Einphasen-Flüssigkeits-Fluideinschluss überführt zu werden.

6. Verfahren gemäß Anspruch 1, wobei die stratigraphische Einheit Sandstein einschließt,
wahlweise wobei der hydrothermische Einschlag mit beschleunigter Porositätsverringerung im Sandstein zusammenhängt.

7. Verfahren gemäß Anspruch 1, wobei der hydrothermische Einschlag mit Bewegungen oder Verschiebungen hydrothermischen Fluids zusammenhängt.

8. Verfahren zum Charakterisieren eines ortsabhängigen geologischen Musters eines geologischen Standorts mit einer Mehrzahl Orte durch Ausführen des Verfahrens nach Anspruch 1, wobei die Verfahrensschritte für jeden aus der Mehrzahl Orte durchgeführt werden.

9. Verfahren gemäß Anspruch 8, wobei das ortsabhängige geologische Muster ein tiefenbezogenes geologisches Muster ist und die Mehrzahl Orte eine Mehrzahl Reservoirtiefen einschließen.

10. Verfahren gemäß Anspruch 8, wobei das geologische Muster eine senkrechte Quarzzementierungstendenz ist,
wahlweise wobei die senkrechte Quarzzementierungstendenz in Verbindung mit einer Bewegung des hydrothermischen Fluids steht,
wahlweise wobei das hydrothermische Fluid in der Form von hydrothermischen Fluidimpulsen ist.

11. Verfahren gemäß Anspruch 8, wobei der geologische Standort ein Becken oder ein Bohrloch ist.

12. Vorrichtung (200) zum Quantifizieren eines hydrothermischen Einschlags auf eine stratographische Einheit, wobei die Vorrichtung ausgelegt ist zum Ausführen des Verfahrens aus irgendeinem der vorhergehenden Ansprüche.

13. Instruktionssatz, ausgelegt zum Auslösen, dass ein Rechner das Verfahren aus irgendeinem der Ansprüche 1 bis 11 ausführt.

14. Speicher mit dem Instruktionssatz aus Anspruch 13 darauf abgelegt.

## Revendications

1. Procédé mis en oeuvre par un ordinateur (100) pour quantifier un impact hydrothermal sur une unité stratigraphique, le procédé comprenant les étapes de :
recevoir (102) des premières données indicatives d'une température de réservoir associée à l'unité stratigraphique ;
recevoir (104) des deuxièmes données indicatives d'estimations des températures de piégeage associées à une pluralité d'inclusions de fluides dans un échantillon de l'unité stratigraphique ;
générer (106) des données de comparaison indicatives d'une comparaison entre les premières données et les deuxièmes données, y compris comparer la température de réservoir avec chacune des estimations des températures de piégeage et déterminer si chacune des estimations des températures de piégeage est supérieure, égale ou inférieure à la température de réservoir ; et
générer (108), à base des données de comparaison, un paramètre d'impact indicatif d'un impact hydrothermal sur l'unité stratigraphique, **caractérisé en ce que** l'étape de générer comprend déterminer un rapport, une proportion ou un pourcentage des estimations de températures de piégeage qui sont supérieures, égales ou inférieures à la température de réservoir.

2. Procédé selon la revendication 1, dans lequel l'étape de générer un paramètre d'impact comprend générer un paramètre d'impact numérique et un paramètre d'impact non-numérique.

3. Procédé selon la revendication 1, dans lequel l'étape de générer un paramètre d'impact comprend générer le paramètre d'impact associé à une profondeur de réservoir.

4. Procédé selon la revendication 1, dans lequel l'étape de générer un paramètre d'impact peut inclure générer le paramètre d'impact pour une parmi une pluralité de profondeurs de réservoir.

5. Procédé selon la revendication 1, dans lequel l'étape de recevoir des deuxièmes données indicatives d'estimations des températures de piégeage inclut recevoir ou obtenir une température d'homogénéisation pour chacune parmi la pluralité d'inclusions de fluides,
éventuellement dans lequel la température d'homogénéisation est définie comme une température à laquelle une inclusion fluide biphasée gaz/liquide est amenée à une transition en une inclusion fluide monophasée liquide.

6. Procédé selon la revendication 1, dans lequel l'unité stratigraphique comprend du grès,
éventuellement dans lequel l'impact hydrothermal est associé à une réduction de porosité accélérée du grès.

7. Procédé selon la revendication 1, dans lequel l'impact hydrothermal est associé à des mouvements ou une migration de fluide hydrothermal.

8. Procédé pour caractériser un modèle géologique dépendant de localité d'un site géologique ayant une pluralité de localités en performant le procédé de la revendication 1, dans lequel les étapes du procédé sont exécutées pour chacune de la pluralité de localités.

9. Procédé selon la revendication 8, dans lequel le modèle géologique dépendant de localité est un modèle géologique en relation avec la profondeur et la pluralité de localités comprennent une pluralité de profondeurs de réservoirs.

10. Procédé selon la revendication 8, dans lequel le modèle géologique est une tendance verticale de cimentation de quartz,
éventuellement dans lequel la tendance verticale de cimentation de quartz est associée à un mouvement de fluide hydrothermal,
éventuellement dans lequel le fluide hydrothermal est dans la forme d'impulsions de fluide hydrothermal.

11. Procédé selon la revendication 8, dans lequel le site géologique est un bassin ou un trou.

12. Appareillage (200) pour quantifier un impact hydrothermal sur une unité stratigraphique, l'appareillage étant configuré pour exécuter le procédé d'une quelconque des revendications précédentes.

13. Jeu d'instructions configuré pour amener un ordinateur à exécuter le procédé d'une quelconque des revendications 1 à 11.

14. Mémoire ayant le jeu d'instructions de la revendication 13 stocké dessus.
